# EUROPEAN PATENT APPLICATION

(11) **EP 4 653 501 A1**
(43) Date of publication of application: **26.11.2025**
(21) Application number: 24305824.5
(22) Date of filing: 24.05.2024
(51) Int. Cl.: C09D 7/20, C09D 127/16

(54) **MONOLAYER WITH IMPROVED ADHESION STRENGTH ON METALLIZED SURFACES**

(71) Applicant: Armor Smart Films, 44100 Nantes (FR)
(72) Inventor: BERTRAND, Mélanie, 44690 CHÂTEAU-THÉBAUD (FR); BERTHOME, Simon, Guillaume, 44860 PONT SAINT MARTIN (FR); ROULLET, Luc, Eric, Bernard, 44118 LA CHEVROLIERE (FR)
(74) Representative: Lavoix

(57) **Abstract**

The invention concerns a monolayer comprising a fluoropolymer, a silicon-sulfur compound, and a vinyl polymer consisting in carbon and hydrogen atoms, and optionally oxygen and/or nitrogen atoms, an assembly comprising a substrate and said monolayer, a method for preparing said monolayer, a component comprising said monolayer and a device comprising said component.

## Description

The present invention concerns a monolayer exhibiting improved long lasting adhesion strength to a substrate, in particular to metallized substrates, in particular under aqueous conditions.

The invention also relates to a method of preparation of such monolayer, and the uses of such monolayer.

Fluoropolymers, such as materials comprising polyvinylidene fluoride, are known in particular for their outstanding dielectric and/or piezoelectric properties, and can be very useful in a wide range of applications, especially in electronic applications. In a large number of applications, they are used in the form of a coated or printed layer, and it is required that this layer exhibits good adhesion properties.

However, fluoropolymers have very weak adhesion strength to metals, which is detrimental for their use in electronic applications, whereby metallic substrates could be required as a substrate.

To overcome this issue, several solutions have been developed. A way to promote adhesion of fluoropolymers to metallic substrates is to use grafted polymers. However, their sourcing and use may be difficult and limited for industrial purposes for large scale and mass production.

Another solution comprises the development and the use of specific adhesive layers to bind the fluoropolymer layer to the metallic substrate. Such layers may comprise acrylics, epoxy, silane-based or thiol-based compounds. However, a major issue related to this solution the presence of at least one additional layer as the adhesive layer(s) shall be added between the fluoropolymer layer and the substrate, leading to a multi-layered structure. Multi-layered structures have the following drawbacks: weakness of the surface, increase in thickness, decrease in flexibility and suppleness, delamination due to high voltage or high frequencies (ultrasound vibrations), delamination due to moisture, additional step in production (printing or coating) with difficulties to handle when overlapping patterns or shapes, drop in dielectric performance / electric conductivity, delimitation due to cutting (edges) and delamination / peeling due to use (friction, bending, scratch, sweat...). Thus, multi-layered structures are not adapted for different applications in severe environments where fluoropolymers may be considered.

One way to promote the adhesion of fluoropolymers with metallic substrate is to add a sulfur-containing adhesion promoting agent in combination with the fluoropolymer.

For example, EP 3638733 discloses a composition comprising a fluoropolymer comprising units derived from vinylidene fluoride and units derived from trifluoroethylene, and a silane agent.

JP2010182994 describes an organic piezoelectric material for an ultrasonic transducer suitable for a high frequency and a wide band, comprising a layer of organic piezoelectric material containing a fluoropolymer and a material capable of forming a covalent bond with the electrode metal including a mercapto group as a functional group.

US 20200239724 also describes a composition for manufacturing a passivation layer, comprising a fluoro-copolymer and a thiol-based adhesion promoter.

However, these layers of the prior art are not sufficiently adhesive to metallic substrates, in particular after soaking the layer and the substrate assembly in an aqueous solution. This issue is critical for end-uses in severe environments, in particular for its use in applications in contact with water such as outdoor applications, electronics or medical devices.

Thus, there is a need for a monolayer comprising a fluoropolymer, and that exhibits very high adhesion strength to a substrate, in particular a metallic substrate, especially when the component is used in a device in contact with fluids such as water.

There is also a need for a monolayer comprising a fluoropolymer exhibiting very high adhesion strength to a substrate, in particular a metallic substrate, while being active. There is in particular a need for a monolayer displaying electroactive property, in particular an electric or electronic or piezoelectric or dielectric or electrostriction property.

There is in particular a need for such monolayer while being flexible.

Thus, the present invention concerns a monolayer comprising:
- a fluoropolymer,
- a silicon-sulfur compound, and
- a vinyl polymer consisting in carbon and hydrogen atoms, and optionally oxygen and/or nitrogen atoms.

Indeed, the inventors found that the fluoropolymer and the silicon-sulfur compound shall be combined with the vinyl polymer to achieve a very good adhesion strength on metallic substrate of the monolayer, in particular to withstand contact in an aqueous solution, while keeping the active properties of interest of the fluoropolymer.

The monolayer according to the invention has the following advantages:
- it is a monolayer with at least two functionalities : adhesion to the substrate and electroactive properties (dielectric / semiconductor / piezoelectric / electric / electronic / electrostriction) ;
- it is a flexible layer;
- it has an enhanced adhesion to substrate, and in particular to copper or gold ; in particular, it enables improved adhesion even when gold is in low quantity in the substrate, meaning when the gold layer is of poorer quality, e.g. lower gold purity levels, less compact, less thick and less homogeneous gold layers. Thus, the use of the layer of the invention reduces the amount of gold required on the surface of the substrate, and is therefore less expensive to produce.
- it is resistant to immersion in an aqueous solution ; thus, the monolayer of the invention is adapted to withstand moisture, liquid and humid environments, without the insertion of an additional intermediate layer thus avoiding dielectric loss at the interface fluoropolymer layer / substrate ;
- it can be applied on conductive substrates, such as electrodes or conductive plates in particular copper, gold, stainless steel, palladium, aluminum, and mixtures thereof.

### Fluoropolymer

The monolayer of the invention comprises at least one fluoropolymer.

A fluoropolymer is a fluorocarbon-based polymer, i.e. comprising several carbon-fluorine bonds.

The fluoropolymer comprises units derived from fluorinated monomers (fluoromonomers). A fluoromonomer comprises at least one carbon-fluorine bond.

Such fluoromonomers are preferably selected from:
- fluoromonomers of formula (I)

   C(X₁)(X₂)=C(X₃)(X₄) (I),
in which each X₁, X₂, X₃ and X₄ is independently selected from H, Cl, Br, F, I, and C1-C6 linear or branched alkyl groups, preferably methyl or ethyl group, which are optionally partially or fully halogenated, with the proviso that at least one of the X₁, X₂, X₃ and X₄ comprises at least one fluorine atom;
- perfluoro(alkylvinylethers) of formula Rx-O-CF=CF₂, Rx being a C1-C8, preferably a C1-C4 linear or branched alkyl group, such as perfluoro(methylvinylether) (PMVE), perfluoro(ethylvinylether) (PEVE), and perfluoro(propylvinylether) (PPVE),
- perfluoro(meth)acrylates of formula Ry-O-(O)C-CF=CF₂, Ry being H or a C1-C8, preferably a C1-C4 linear or branched alkyl group,
- fluoro(meth)acrylate of formula Rz-O-(O)C-CH=CH₂, Ry being a C1-C8, preferably a C1-C4 linear or branched alkyl group being at least one, preferably three fluorine atoms,
- perfluorocycloalkene in C3-C6 (Tetrafluorocyclopropene, Hexafluorocyclobutene, Octafluorocyclopentene, Decafluorocyclohexene),
- perfluoro(1,3-dioxole);
- perfluoro(2,2-dimethyl-1,3-dioxole) (PDD),
- fluoromonomers of formula CF₂=C(F)O-CF₂CF(CF₃)-O-CF₂CF₂-X with X being CO₂H, CH₂OH, CO₂CH₃, SO₂F, CH₂OPO₃H or CH₂OCN,
- fluoromonomer of formula CF₂=C(F)-O-CF₂CF₂SO₂F,
- fluoromonomers of formula R-CH₂-O-CF=CF₂ wherein R is H or F(CF₂)ₘ- and m is 1, 2 or 3,
- fluoromonomers of formula R'-O-CF=CH₂ wherein R' is F(CF₂)ₙ- and n is 1, 2, 3, or
- fluoromonomers of formula F(CF₂)_{z}CH₂-O-CF=CF₂ wherein z is 1, 2, 3, 4, or 5.

The fluoropolymer preferably comprises units derived from fluoromonomers of formula (I).

Preferably, in formula (I), each X₁, X₂, X₃ and X₄ is independently selected from H, F, Cl, I, Br, or a methyl group optionally comprising one or more substituents selected from F, Cl, I and Br, more preferably is independently selected from H, F, Cl, Br, or a methyl group optionally comprising one or more substituents selected from F, CI, and Br, even more preferably is independently selected from H, F, Cl or a methyl group optionally comprising one or more substituents selected from F and CI, advantageously is independently selected from H, F and a methyl group optionally comprising one or more F, with the proviso that at least one of the X₁, X₂, X₃ and X₄ comprises at least one fluorine atom.

According to an embodiment, each X₁, X₂, X₃ and X₄ is independently selected from H, F, Cl, I and Br, preferably is independently selected from H, F, Cl, and Br, more preferably is independently selected from H, F and CI, even more preferably is independently selected from H and F, with the proviso that at least one of the X₁, X₂, X₃ and X₄ comprises at least one fluorine atom.

According to another embodiment, one and only one of X₁, X₂, X₃ and X₄ is selected from CI, I and Br, preferably CI , and the other X₁, X₂, X₃ and X₄ are independently selected from H, F or a C1-C3 alkyl, preferably a C1-C2 alkyl, more preferably a methyl, said alkyl or methyl optionally having one or more fluorine substituents, with the proviso that at least one of the X₁, X₂, X₃ and X₄ comprises at least one fluorine atom.

Examples of fluoromonomers of formula (I) are: vinyl fluoride (fluoroethylene), vinylidene fluoride (VDF), 1,2-difluoroethylene, trifluoroethylene (TrFE), tetrafluoroethylene (TFE), hexafluoropropylene (HFP), trifluoropropenes as 3,3,3-trifluoropropene, tetrafluoropropenes as 2,3,3,3-tetrafluoropropene or 1,3,3,3-tetrafluoropropene, pentafluoropropenes as 1,1,3,3,3-pentafluoropropene or 1,2,3,3,3-pentafluoropropene, hexafluoropropenes, hexafluoroisobutylene, 3,3,3-trifluoro-2-(trifluoromethyl)propene, perfluorobutylethylene (PFBE), bromofluoroethylene (1-bromo-1-fluoroethylene or 1-bromo-2-fluoroethylene), bromodifluoroethylene (1-bromo-2,2-difluoroethylene or 1-bromo-1,2-difluoroethylene), bromotrifluoroethylene (1-bromo-3,3,3-trifluoropropene in cis or trans form or 2-bromo-3,3,3-trifluoropropene), chlorofluoroethylene (CFE) (1-chloro-1-fluoroethylene or 1-chloro-2-fluoroethylene), chlorodifluoroethylene (1-chloro-2,2-difluoroethylene or 1-chloro-1,2-difluoroethylene), chlorotrifluoroethylene (CTFE) (1-chloro-3,3,3-trifluoropropene in cis or trans form or 2-chloro-3,3,3-trifluoropropene), bromotrifluoropropene, chlorotrifluoropropene, (1 or 2 or 3 or 4)-bromo-(1 or 2)-fluorobutene, (1 or 2 or 3 or 4)-chloro-(1 or 2)-fluorobutene, (2 or 3 or 4)-chloro-1,1-difluorobutene, (2 or 3 or 4)-bromo-1,1-difluorobutene, (3 or 4)-bromo-1,1,2-trifluorobutene, (3 or 4)-chloro-1,1,2-trifluorobutene.

The fluoropolymer can be a homopolymer of a fluoromonomer, or may be obtained by copolymerizing a fluoromonomer with one or more other(s) fluoromonomer(s) and/or other(s) monomer(s) that are not fluoromonomers, to form a copolymer.

By copolymer, it is meant is a polymer derived from more than one species of monomer. Copolymers according to the invention are in particular comonomers of two monomers (dipolymer) or of three different monomers (terpolymer).

Preferably, the total molar content of fluoromonomers in the fluoropolymer is from 40% to 100%, preferably from 50% to 95%, more preferably from 60% to 90%, related to the total molar content of the monomers of the fluoropolymer.

Monomers that are not fluoromonomers and that can be copolymerized with fluoromonomers are preferably selected from non-fluorinated ethylenic monomers.

Ethylenic monomers are molecules comprising at least one carbon-carbon double bond. Preferably, the non-fluorinated ethylenic monomer is of formula C(R₁)(R₂)=C(R₃)(R₄), with R₁, R₂, R₃ and R₄ being independently selected from the group consisting of a hydrogen atom, an aromatic group, preferably phenyl, a C1-C10, preferably C1-C4 linear or branched or cyclic, saturated or unsaturated hydrocarbon group, optionally further comprising ether, ester, nitrile, carboxyl, amine and/or amide group(s), including the possibility that two groups from R₁, R₂, R₃ and R₄ form a 5-, 6- or 7-member ring.

Advantageously, the non-fluorinated ethylenic monomer is selected from ethylene, propylene, methyl or ethyl vinyl ether, vinyl ester, allyl glycidyl ether, (meth)acrylic acid, (m)ethyl (meth)acrylic acid, and vinyl acetate.

Preferably, the molar content (or molar ratio) of first fluoromonomer (in particular when the first fluoromonomer is vinylidene fluoride) in the fluoropolymer is from 40% to 98%, preferably from 50% to 90%, more preferably from 60% to 80%, even more preferably from 60% to 70%. Preferably, the molar content of second fluoromonomer in the fluoropolymer is from 2% to 60%, preferably from 10% to 50%, more preferably from 20% to 40%, even more preferably from 30% to 40%, related to the total molar content of the monomers of the fluoropolymer.

According to an embodiment, the fluoropolymer is a dipolymer of two different fluoromonomers, i.e. of a first fluoromonomer and a second fluoromonomer. The fluoromonomers are each independently as described above.

Preferably, the fluoropolymer is a terpolymer of at least three different fluoromonomers, i.e. of a first fluoromonomer, a second fluoromonomer and a third fluoromonomer. The fluoromonomers are each independently as described above.

The fluoropolymer may comprise first fluoromonomer units and second fluoromonomer units, or may consists of the first fluoromonomer units and of the second fluoromonomer units. The fluoropolymer may also comprise first fluoromonomer units, second fluoromonomer units and third fluoromonomer units, or may consists of the first fluoromonomer units, the second fluoromonomer units and the third fluoromonomer units.

In particular, the fluoropolymer is a copolymer of vinylidene fluoride (as first fluoromonomer) and of at least one second fluoromonomer, the second fluoromonomer being a fluoromonomer as described above, provided that it is different from vinylidene fluoride. More preferably the fluoropolymer is a terpolymer of vinylidene fluoride (as first fluoromonomer) and of a second fluoromonomer and a third fluoromonomer, provided that the second and third fluoromonomers are different from vinylidene fluoride and different from each other.

The fluoropolymer may comprise vinylidene fluoride units and second fluoromonomer units (and third fluoromonomer units, if present), or may consists of vinylidene fluoride units and of second fluoromonomer units (and third fluoromonomer units, if present).

The second fluoromonomer is preferably a fluoromonomer of formula (I), as described above.

If present, the third fluoromonomer is preferably a fluoromonomer of formula (I), as described above.

Preferably, the fluoropolymer is a copolymer, preferably a dipolymer, of vinylidene fluoride and of (at least) a second fluoromonomer of formula (I) in which each X₁, X₂, X₃ and X₄ is independently selected from H, F, Cl, I, Br, or a methyl group optionally comprising one or more substituents selected from F, CI, I and Br, preferably independently selected from H, F, Cl, Br or a methyl group optionally comprising one or more substituents selected from F, CI and Br, with the proviso that at least one of the X₁, X₂, X₃ and X₄ comprises at least one fluorine atom, and provided that the second fluoromonomer is different from vinylidene fluoride.

More preferably, the fluoropolymer is a copolymer, preferably a dipolymer, of vinylidene fluoride and of (at least) a second fluoromonomer of formula (I) in which each X₁, X₂, X₃ and X₄ is independently selected from H, CI, F or a methyl group optionally comprising one or more F or CI, preferably selected from H, F or a methyl group optionally comprising one or more F, with the proviso that at least one of the X₁, X₂, X₃ and X₄ comprises at least one fluorine atom, and provided that the second fluoromonomer is different from vinylidene fluoride.

According to an embodiment, the fluoropolymer is a copolymer, preferably a dipolymer, of vinylidene fluoride and of (at least) a second fluoromonomer of formula (I) in which each X₁, X₂, X₃ and X₄ is independently selected from H, F, Cl, I or Br, preferably selected from H, F, Cl or Br, more preferably selected from H, F and CI, with the proviso that at least one of the X₁, X₂, X₃ and X₄ comprises at least one fluorine atom, and provided that the second fluoromonomer is different from vinylidene fluoride.

According to another embodiment, the fluoropolymer is a copolymer, preferably a dipolymer, of vinylidene fluoride and of (at least) a second fluoromonomer of formula (I) in which one and only one of X₁, X₂, X₃ and X₄ is selected from CI, I and Br, preferably CI and Br, and the other X₁, X₂, X₃ and X₄ are independently selected from H, F or a C1-C3 alkyl, preferably a C1-C2 alkyl, more preferably a methyl, said alkyl or methyl optionally having one or more fluorine substituents, advantageously the other X₁, X₂, X₃ and X₄ are independently selected from H and F, with the proviso that at least one of the X₁, X₂, X₃ and X₄ comprises at least one fluorine atom, and provided that the second fluoromonomer is different from vinylidene fluoride.

Preferably, the fluoropolymer is a copolymer, preferably a dipolymer, of vinylidene fluoride and of (at least) a second fluoromonomer selected from vinyl fluoride (fluoroethylene), vinylidene fluoride (VDF), 1,2-difluoroethylene, trifluoroethylene (TrFE), tetrafluoroethylene (TFE), hexafluoropropylene (HFP), trifluoropropenes as 3,3,3-trifluoropropene, tetrafluoropropenes as 2,3,3,3-tetrafluoropropene or 1,3,3,3-tetrafluoropropene, pentafluoropropenes as 1,1,3,3,3-pentafluoropropene or 1,2,3,3,3-pentafluoropropene, hexafluoropropenes, hexafluoroisobutylene, 3,3,3-trifluoro-2-(trifluoromethyl)propene, perfluorobutylethylene (PFBE), bromofluoroethylene (1-bromo-1-fluoroethylene or 1-bromo-2-fluoroethylene), bromodifluoroethylene (1-bromo-2,2-difluoroethylene or 1-bromo-1,2-difluoroethylene), bromotrifluoroethylene (1-bromo-3,3,3-trifluoropropene in cis or trans form or 2-bromo-3,3,3-trifluoropropene), chlorofluoroethylene (CFE) (1-chloro-1-fluoroethylene or 1-chloro-2-fluoroethylene), chlorodifluoroethylene (1-chloro-2,2-difluoroethylene or 1-chloro-1,2-difluoroethylene), chlorotrifluoroethylene (CTFE) (1-chloro-3,3,3-trifluoropropene in cis or trans form or 2-chloro-3,3,3-trifluoropropene), bromotrifluoropropene, chlorotrifluoropropene, (1 or 2 or 3 or 4)-bromo-(1 or 2)-fluorobutene, (1 or 2 or 3 or 4)-chloro-(1 or 2)-fluorobutene, (2 or 3 or 4)-chloro-1,1-difluorobutene, (2 or 3 or 4)-bromo-1,1-difluorobutene, (3 or 4)-bromo-1,1,2-trifluorobutene, (3 or 4)-chloro-1,1,2-trifluorobutene.

According to a most preferred embodiment, the fluoropolymer is a copolymer, preferably a dipolymer, of vinylidene fluoride and of (at least) a fluoromonomer selected from hexafluoropropylene, chlorofluoroethylene, chlorotrifluoroethylene, tetrafluoroethylene and trifluoroethylene, preferably selected from chlorofluoroethylene, chlorotrifluoroethylene and trifluoroethylene.

According to a preferred embodiment, the fluoropolymer is a terpolymer of vinylidene fluoride, of a second fluoromonomer of formula (I) and of a third fluoromonomer of formula (I), in which each X₁, X₂, X₃ and X₄ is independently selected from H, F, Cl, I, Br, or a methyl group optionally comprising one or more substituents selected from F, CI, I and Br, preferably independently selected from H, F, Cl, Br or a methyl group optionally comprising one or more substituents selected from F, CI and Br, with the proviso that at least one of the X₁, X₂, X₃ and X₄ comprises at least one fluorine atom, and provided that the second and third fluoromonomers are different from vinylidene fluoride and different from each other.

More preferably, the fluoropolymer is a terpolymer of vinylidene fluoride, of a second fluoromonomer of formula (I) and of a third fluoromonomer of formula (I), in which each X₁, X₂, X₃ and X₄ is independently selected from H, CI, F or a methyl group optionally comprising one or more F or CI, preferably selected from H, F or a methyl group optionally comprising one or more F, with the proviso that at least one of the X₁, X₂, X₃ and X₄ comprises at least one fluorine atom, and provided that the second and third fluoromonomers are different from vinylidene fluoride and different from each other.

According to an embodiment, the fluoropolymer is a terpolymer of vinylidene fluoride of a second fluoromonomer of formula (I) and of a third fluoromonomer of formula (I), in which each X₁, X₂, X₃ and X₄ is independently selected from H, F, Cl, I or Br, preferably selected from H, F, Cl or Br, more preferably selected from H, F and CI, with the proviso that at least one of the X₁, X₂, X₃ and X₄ comprises at least one fluorine atom, and provided that the second and third fluoromonomers are different from vinylidene fluoride and different from each other.

According to another embodiment, the fluoropolymer is a terpolymer of vinylidene fluoride of a second fluoromonomer of formula (I) and of a third fluoromonomer of formula (I), in which one and only one of X₁, X₂, X₃ and X₄ is selected from CI, I and Br, preferably CI and Br, and the other X₁, X₂, X₃ and X₄ are independently selected from H, F or a C1-C3 alkyl, preferably a C1-C2 alkyl, more preferably a methyl, said alkyl or methyl optionally having one or more fluorine substituents, advantageously the other X₁, X₂, X₃ and X₄ are independently selected from H and F, with the proviso that at least one of the X₁, X₂, X₃ and X₄ comprises at least one fluorine atom, and provided that the second and third fluoromonomers are different from vinylidene fluoride and different from each other.

Preferably, the fluoropolymer is a terpolymer of vinylidene fluoride, of a second fluoromonomer and of a third fluoromonomer, second and third fluoromonomers being independently selected from vinyl fluoride (fluoroethylene), vinylidene fluoride (VDF), 1,2-difluoroethylene, trifluoroethylene (TrFE), tetrafluoroethylene (TFE), hexafluoropropylene (HFP), trifluoropropenes as 3,3,3-trifluoropropene, tetrafluoropropenes as 2,3,3,3-tetrafluoropropene or 1,3,3,3-tetrafluoropropene, pentafluoropropenes as 1,1,3,3,3-pentafluoropropene or 1,2,3,3,3-pentafluoropropene, hexafluoropropenes, hexafluoroisobutylene, 3,3,3-trifluoro-2-(trifluoromethyl)propene, perfluorobutylethylene (PFBE), bromofluoroethylene (1-bromo-1-fluoroethylene or 1-bromo-2-fluoroethylene), bromodifluoroethylene (1-bromo-2,2-difluoroethylene or 1-bromo-1,2-difluoroethylene), bromotrifluoroethylene (1-bromo-3,3,3-trifluoropropene in cis or trans form or 2-bromo-3,3,3-trifluoropropene), chlorofluoroethylene (CFE) (1-chloro-1-fluoroethylene or 1-chloro-2-fluoroethylene), chlorodifluoroethylene (1-chloro-2,2-difluoroethylene or 1-chloro-1,2-difluoroethylene), chlorotrifluoroethylene (CTFE) (1-chloro-3,3,3-trifluoropropene in cis or trans form or 2-chloro-3,3,3-trifluoropropene), bromotrifluoropropene, chlorotrifluoropropene, (1 or 2 or 3 or 4)-bromo-(1 or 2)-fluorobutene, (1 or 2 or 3 or 4)-chloro-(1 or 2)-fluorobutene, (2 or 3 or 4)-chloro-1,1-difluorobutene, (2 or 3 or 4)-bromo-1,1-difluorobutene, (3 or 4)-bromo-1,1,2-trifluorobutene, (3 or 4)-chloro-1,1,2-trifluorobutene.

According to a most preferred embodiment, the fluoropolymer is a terpolymer of vinylidene fluoride, of a second fluoromonomer and of a third fluoromonomer, second and third fluoromonomers being independently selected from hexafluoropropylene, chlorofluoroethylene, chlorotrifluoroethylene, tetrafluoroethylene and trifluoroethylene, preferably selected from chlorofluoroethylene, chlorotrifluoroethylene and trifluoroethylene.

Preferably, the terpolymer is a polymer of vinylidene fluoride, trifluoroethylene (as second fluoromonomer) and chlorotrifluoroethylene (P(VDF-TrFE-CTFE)) (as third fluoromonomer), or a terpolymer of vinylidene fluoride, trifluoroethylene (as second fluoromonomer) and chlorofluoroethylene (P(VDF-TrFE-CFE)) (as third fluoromonomer).

Preferably, the molar content (or molar ratio) of vinylidene fluoride in the fluoropolymer is from 40% to 98%, preferably from 50% to 80%, more preferably from 60% to 75%, even more preferably from 60% to 70%. Preferably, the molar content of second fluoromonomer in the fluoropolymer is from 15% to 45%, preferably from 20% to 40%, more preferably from 25% to 30%, related to the total molar content of the monomers of the fluoropolymer. Preferably, the molar content of third fluoromonomer in the fluoropolymer is from 1% to 15%, preferably from 3% to 12%, more preferably from 5% to 10%, related to the total molar content of the monomers of the fluoropolymer.

The weight average molar mass Mw of the fluoropolymer is preferably at least 100,000 g.mol⁻¹ , preferably at least 200,000 g.mol⁻¹, more preferably at least 300,000 g.mol⁻¹ even more preferably at least 400,000 g.mol⁻¹, preferably comprises between 200,000 and 1,000,000 g.mol⁻¹. The molecular weight distribution can be determined by size exclusion chromatography (SEC).

The monolayer of the invention preferably comprises from 80% to 99.9% by mass of fluoropolymer in relation to the total mass of the monolayer, preferably from 90% to 99.8% by mass, preferably from 95% to 98.5% by mass.

### Silicon-sulfur compound

A silicon-sulfur compound is a compound comprising at least one silicon atom and at least one sulfur atom, preferably at least one silane group and/or at least one silazane group, and at least one sulfur atom, more preferably at least one silane group and at least one sulfur atom.

A silane group is preferably a group of formula -Si(Ra)(Rb)(Rc), in which Ra, Rb and Rc are each independently selected from H, OH, Alk and -O-Alk, Alk being a C1-C8 linear or branched alkyl group, preferably selected from OH, Alk and -O-Alk.

A silazane group comprises at least a Si-N bond, preferably comprises at least one nitrogen atom covalently bonded to a hydrogen atom and to two silicon atoms (-Si-NH-Si-group).

Preferably, Ra, Rb et Rc are each independently selected from Alk and -O-Alk.

Preferably, Alk (or independently the Alk of the -O-Alk group) is a C1-C4 linear or branched alkyl group, more preferably a methyl or ethyl group, even more preferably is a methyl group.

Preferably, in the silicon-sulfur compound, the sulfur atom of the thiol function is not directly linked to the silicon atom.

More preferably, the sulfur compound of the silicon-sulfur compound is present under the form of a -S-(Rd) group, wherein (Rd) is chosen from the group consisting of H, and an organic moiety comprising from 1 to 30 carbon atoms and at least one nitrogen atom and/or at least one oxygen atom. Preferably, (Rd) is chosen from the group consisting of H, and an organic moiety consisting of from 1 to 30 carbon atoms, hydrogen atoms and one or several nitrogen atoms and/or one or several oxygen atoms.

Preferably, the silicon-sulfur compound is of formula (II):

(Rd)S-Rw-Si(Ra)(Rb)(Rc) (II)

Rw being a linear or branched or cyclic group comprising from 1 to 18 carbon atoms, and optionally comprising one or several oxygen and/or nitrogen atoms, and Ra, Rb, Rc and Rd being as described above according to any embodiment. More preferably, Rw is a C1-C12, preferably a C1-C8, preferably a C1-C6, preferably a C1-C4, more preferably a C2-C4 linear or branched, preferably linear, alkyl or alkylene group, preferably alkyl group.

According to a preferred embodiment, Rd is H. According to this embodiment, the silicon-sulfur compound is a mercaptosilane, i.e. a compound comprising at least one silane group and at least one thiol function (-SH).

Preferably, the silicon-sulfur compound is not a polymer.

Preferably, the silicon-sulfur presents a molecular mass below 800 g.mol⁻¹, preferably below 600 g.mol⁻¹, preferably below 400 g.mol⁻¹, preferably below 250 g.mol⁻¹, preferably between 80 g.mol⁻¹ and 800 g.mol⁻¹.

Non-limiting examples of silicon-sulfur compounds are:
- Octanethioic acid, S-[3-(triethoxysilyl)propyl] ester, reaction products with 2-methyl-1,3-propanediol and 3-(triethoxysilyl)-1-propanethiol (EC number: 485-270-1);
- 3-(triethoxysilyl)propanethiol (CAS number 14814-09-6);
- 3-(dimethoxymethylsilyl)-2-methylpropanethiol (CAS number 14857-92-2);
- 3-(methoxydimethylsilyl)propanethiol (CAS number 14857-97-7);
- Hexamethylene diisocyanate, oligomers, reaction products with 3-aminopropylmethylamine, trimethylacetaldehyde and 3-trimethoxysilylpropane-1-thiol (CAS number 161278-26-8);
- Pentaerythritol, propoxylated, reaction products with 3-isocyanato-3,5,5-trimethylcyclohexyl isocyanate and 3-trimethoxysilylpropane-1-thiol (CAS number 161308-00-5);
- Hexamethylene diisocyanate, trimers, reaction products with (3-aminopropyl)methylamine, benzaldehyde and 3-trimethoxysilylpropane-1-thiol (CAS number 162491-90-9);
- 2-methyl-3-(triethoxysilyl)propanethiol (CAS number 17980-28-8);
- 2-(triethoxysilyl)ethanethiol (CAS number 18236-15-2);
- (trimethylsilyl)methyl thiocyanate (CAS number 18293-51-1);
- Trimethylsilyl isothiocyanate (CAS number 2290-65-5);
- 3-(dimethoxymethylsilyl)propanethiol (CAS number 31001-77-1);
- 1 -allyl-3-[3-(triethoxysilyl)propyl]thiourea (CAS number 42168-36-5);
- 3-trimethoxysilylpropane-1-thiol (CAS number 4420-74-0);
- 4-(triethoxysilyl)butane-2-thiol (CAS number 57640-10-5);
- 2-[3-(trimethoxysilyl)propyl]isothiouronium chloride (CAS number 58505-58-1);
- 3-[tris(2-ethoxyethoxy)silyl]propanethiol (CAS number 67724-41-8);
- 2-(trimethoxysilyl)ethanethiol (CAS number 7538-45-6);
- A mixture of: S-(3-trimethoxysilyl)propyl 19-isocyanato-11-(6-isocyanatohexyl)-10,12-dioxo-2,9,11,13-tetraazanonadecanethioate; S-(3-(trimethoxysilyl)propyl 17-isocyanato-9-(isocyanatohexyl-aminocarbonyl)-10-oxo-2,9,11-triazaheptadecanethioate (CAS number 85702-90-5);
- 1,3-dibutyl-2-[3-(triethoxysilyl)propyl]isothiouronium chloride (CAS number 90210-34-7);
- 1,3-diphenyl-2-[3-(triethoxysilyl)propyl]isothiourea, monohydrochloride (CAS number 90210-35-8);
- 3-[tris(decyloxy)silyl]propanethiol (CAS number 93777-94-7);
- 1-methyl-3-(triethoxysilyl)propyl thiocyanate (CAS number 94087-37-3);
- 2-methyl-3-(triethoxysilyl)propyl thiocyanate (CAS number 94087-38-4);
- 3-[tris(octyloxy)silyl]propanethiol (CAS number 94291-66-4).

Advantageous examples of silicon-sulfur compound include:
- 3-(triethoxysilyl)propanethiol (CAS number 14814-09-6);
- 3-(dimethoxymethylsilyl)-2-methylpropanethiol (CAS number 14857-92-2);
- 3-(methoxydimethylsilyl)propanethiol (CAS number 14857-97-7);
- 2-methyl-3-(triethoxysilyl)propanethiol (CAS number 17980-28-8);
- 2-(triethoxysilyl)ethanethiol (CAS number 18236-15-2);
- 3-(dimethoxymethylsilyl)propanethiol (CAS number 31001-77-1);
- 3-trimethoxysilylpropane-1-thiol (CAS number 4420-74-0);
- 4-(triethoxysilyl)butane-2-thiol (CAS number 57640-10-5);
- 3-[tris(2-ethoxyethoxy)silyl]propanethiol (CAS number 67724-41-8);
- 2-(trimethoxysilyl)ethanethiol (CAS number 7538-45-6);
- 3-[tris(decyloxy)silyl]propanethiol (CAS number 93777-94-7);
- 3-[tris(octyloxy)silyl]propanethiol (CAS number 94291-66-4).

The monolayer of the invention preferably comprises from 0.05% to 10% by mass of silicon-sulfur compound in relation to the total mass of the monolayer, preferably from 0.10% to 5% by mass, preferably from 0.50% to 3.0% by mass, preferably from 0.75% to 2.5% by mass.

### Vinyl polymer

The monolayer of the invention comprises at least one vinyl polymer consisting in carbon and hydrogen atoms, and optionally oxygen and/or nitrogen atoms.

Vinyl polymers comprises units derived from one or several vinyl monomers.

Vinyl monomer refers to a small organic molecule comprising at least one carbon-carbon double bond.

Preferably, the vinyl monomer has the following formula: C(X)(X')=C(X")(X‴), wherein X, X', X" and X‴ are independently selected from the group consisting of a hydrogen atom, an OH group, a COOH group, a CN group, an aromatic group, preferably a phenyl group, a hydrocarbon group comprising from 1 to 10 carbon atoms, preferably from 2 to 10 carbon atoms, saturated or unsaturated, said aromatic group or hydrocarbon group optionally further comprising an OH group, an ester group, a carboxyl group, an amine group, a nitrile group, and/or an amide group.

Vinyl monomers are preferably chosen from the group consisting of alkenyl monomers in C2-C8, preferably in C2-C4, dienic monomers in C4-C12, acrylate monomers, styrenic monomers, vinylic alcohol, vinyl acetate, acrylamide monomers, maleic acid, and acrylonitrile.

The vinyl polymer may also be an elastomer, such as but not limited to copolymers of acrylonitrile and ethylene, or terpolymer or ethyl monomers, acrylate monomers and other vinyl monomers.

The vinyl polymer may also be a PVA copolymer, a copolymer of vinyl acetate and acrylic acid, Polyacrylamide

Preferably, the vinyl polymer is an acrylate polymer.

An acrylate polymer is polymer based on (or obtained from) acrylic acid or acrylic acid derivative, thus it is a polymer comprising units derived from acrylate monomers.

Acrylate monomers are molecules comprising at least an ester function and an unsaturated C=C double bond directly linked to the carbon of the acid or ester function. In other words, acrylate monomers vinyl monomers comprising an ester group, i.e. two double-bonded carbon atoms attached directly to the carbonyl group. Acrylate polymers belong to the family of vinyl polymers.

According to the invention, acryclic acid is included in the definition of acrylate monomer.

Preferably, the acrylate polymer comprises units derived from an acrylate monomer of formula (III) 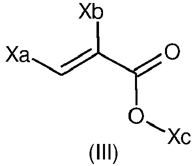 wherein Xa and Xb are independently selected from H, a -CN group, and a C1-C8 linear, branched or cyclic, saturated or unsaturated group comprising from 1 to 8 carbon atoms, and Xc is selected from H, a benzyl group, and a linear or branched or cyclic, saturated or unsaturated, aliphatic or aromatic group comprising from 1 to 24 carbon atoms, optionally substituted by at least one OH group and/or one COOH group, and/or optionally interrupted by at least one -O- atom.

Preferably, Xa and Xb are independently selected from H and a C1-C8 linear or branched alkyl group.

Preferably, Xa = H.

Preferably, Xb = H, a -CN group or a C1-C2 alkyl group, preferably H or a C1-C2 alkyl group more preferably H or a methyl group.

Preferably, Xc is selected from:
- a saturated, a linear or branched alkyl group in C1-C24, preferably in C1-C16, more preferably in C1-C8, even more preferably in C1-C4, advantageously is a methyl or an ethyl; and
- an -A-O-Rx group with A being -CH₂CH(OH)CH₂- or -CH₂CH(CH₂OH)- and Rx being a C10-C22 linear or branched alkyl group.

More preferably, Xc is a saturated, a linear or branched alkyl group in C1-C24, preferably in C1-C16, more preferably in C1-C8, even more preferably in C1-C4, advantageously is a methyl or an ethyl.

The acrylate monomer may be an acrylate with an additional methyl group attached to (Xb) and Xc is a methyl group. The acrylate monomer may also be a methacrylate. One of the most common methacrylate polymers is poly methyl methacrylate (PMMA).

Acrylate monomers are in particular ethyl acrylate, ethyl methacrylate, butyl acrylate, ethylhexyle acrylate or derivatives.

The acrylate polymer can be a homopolymer of an acrylate monomer, preferably of formula (III), or may be obtained by copolymerizing an acrylate monomer with one or more other(s) acrylate monomer(s) and/or other(s) monomer(s) that are not acrylate monomers, to form a copolymer.

For example, the acrylate polymer may be a copolymer of methyl acrylate and methyl methacrylate, ethyl acrylate and methyl acrylate, butyl acrylate and 2-ethylhexyle acrylate.

The acrylate polymer can also be an acrylonitrile styrene (meth)acrylate terpolymer, a styrene-acrylonitrile copolymer with grafted acrylic elastomers, or a copolymer of styrene and acrylate monomer. Monomers that are not acrylate monomers and that can be copolymerized with acrylate monomers are preferably selected from vinyl monomers as described above, with the proviso that such vinyl monomers are not acrylate monomers.

Monomers that are not acrylate monomers and that can be copolymerized with acrylate monomers can be alkenyl monomers in C2-C8, preferably in C2-C4, dienic monomers in C4-C12, styrenic monomers, vinylic alcohol, vinyl acetate, acrylamide monomers, maleic acid, and acrylonitrile.

Acrylic monomers may be ethyl acrylate, butyl acrylate, ethylhexyle acrylate or derivatives.

The vinyl (co)monomer is preferably or formula C(X)(X')=C(X")(X‴), with X, X', X" and X‴ as described above.

Preferably, X = X' = H.

According to an embodiment, X = X' = H, X" is H or a C1-C2 alkyl group, preferably H, and X‴ is -C₆H₅, -CN, -C(O)NH₂, -NC₄H₆O, -C(O)NHC(CH₃)₃, -C(O)N(CH₃)₂, - C(O)NHC(CH₃)₂(CH₂)₄CH₃, and -C(O)NHC(CH₃)₂CH₂S(O)(O)OH.

According to another embodiment, X = X' = H, X" = is H or a C1-C2 alkyl group, preferably H, and X‴ is -O-C(O)-Xm, with Xm being a linear or branched C1-C18 alkyl group.

According to another embodiment, X = X' = H, X" = is H or a C1-C2 alkyl group, preferably H, and X‴ is -O-C(O)-Xm, with Xm being a linear or branched C1-C18 alkyl group.

Preferably, the vinyl polymer is not fluorinated; which means that the vinyl polymer does not comprise any fluorine atom.

According to an embodiment, the vinyl polymer is not sodium poly(meth)acrylate. In particular, the vinyl polymer is not a superabsorbent polymer. In particular, the vinyl monomer is not an alkaline salt of acrylic acid and acrylate monomers.

The monolayer of the invention preferably comprises from 0.05% to 10.0% by mass of vinyl polymer in relation to the total mass of the monolayer, preferably from 0.10% to 8.0% by mass, preferably from 0.50% to 5.0% by mass, preferably from 0.75% to 4.0% by mass.

### Monolayer

Preferably, the thickness of the monolayer according to the invention is between 0.1 µm and 50 µm, preferably between 0.5 µm and 40 µm, preferably between 1.0 µm and 30 µm, preferably between 1.0 µm and 20 µm, preferably between 2.0 µm and 10 µm.

Preferably, the total mass of the fluoropolymer, the silicon-sulfur compound and the vinyl polymer in the monolayer represents more than 80% by mass, preferably more than 90% by mass, preferably more than 95% by mass, more preferably more than 98 % by mass, preferably between 80 % and 99.99% by mass, relatively to the total mass of the monolayer.

According to an embodiment, the monolayer is free from metal oxide particles, preferably is free of metal, more preferably is free from inorganic crystals.

Preferably, the piezoelectric compounds of the monolayer are essentially organic (preferably polymeric) piezoelectric compounds.

Preferably, the monolayer is an active monolayer, preferably is an electroactive monolayer. By 'active monolayer' or 'electroactive monolayer' it is meant a monolayer comprising the property to react to electric or magnetic fields, to interact with electric or magnetic fields or to anneal the effect of electric or magnetic fields. Such active functionality may encompass direct or inverse piezoelectric, electronic, dielectric, semiconductive, piezoelectric, electric, and/or electrostriction performances.

As opposed to a self-assembled monolayers (SAMs), the monolayer exhibits a strong interaction with substrates to insure adherence and dielectric properties (self-assembled monolayers of organic molecules are molecular assemblies formed spontaneously on surfaces by adsorption, and organized in ordered domains of varying size. In some cases, the molecules forming the monolayer do not interact strongly with the substrate).

The invention also relates to an assembly comprising a substrate and a monolayer according to the invention, the monolayer being applied to at least one surface of the substrate or to part of a surface of the substrate. The monolayer is in contract with at least one surface of the substrate. The monolayer may be applied to the substrate as a thin film, in whole or in part. The monolayer may be applied as continuous or discontinuous surfaces, patterns, tracks...

The substrate may in particular be glass, silicon, quartz, polymeric material, metallic, or a mixed surface composed of several of those materials.

Preferably, the substrate is or comprises a metal, in particular selected from gold, stainless steel, copper and aluminum, chromium and silver.

Preferably, the substrate comprises a metallic surface, in particular a gold, stainless steel, copper, aluminum, chromium or silver surface, more particularly a copper or gold surface. Preferably, the monolayer is applied onto and in contact with said metallic surface.

According to an embodiment, the substrate comprises a gold surface, preferably consists in gold.

According to another embodiment, the substrate comprises a copper surface, preferably consists in copper.

More preferably, the substrate comprises (or consists in) gold, preferably a gold surface.

The substrate may be of any shape. The substrate may be flat or in relief, smooth or rough, linear or curved, porous or non-porous.

### Methods and uses

The invention also relates to a method of manufacturing a monolayer, preferably according to the invention, comprising a step of applying a composition comprising at least a fluoropolymer, a silicon-sulfur compound and a vinyl polymer on a substrate to form a film on the substrate.

The invention also relates to a method of manufacturing an assembly comprising a substrate and a monolayer as described above, comprising a step of applying a composition comprising at least a fluoropolymer, a silicon-sulfur compound and a vinyl polymer on a substrate.

The method to apply the composition may be carried out by any conventional coating, printing or laminating method known from the skilled person. The coating method may be carried out in a batch or in a roll-to roll (also called reel-to-reel or R2R), or roll-to-sheet or a sheet-to-roll process, or sheet-to-sheet. Preferably, the method is a roll-to-roll process, for example by roll-coating or roll-printing, knife-coating, curtain-coating, dipping, roll-coating, spin-coating, spray coating, gravure coating, jet printing, flat or rotary screen printing, slot die, Light Induced Forward Transfer printing (LIFT)....

The composition may further comprise a solvent. Preferably, the method further comprises a step of evaporating the solvent of the composition. The evaporation of the solvent is preferably carried out by heat drying the film applied to the substrate, for example at a temperature from 60 to 190 °C. Drying may be carried out according to any method, such as but not limited to air drying, heating plate, infrared drying, laser drying, microwave drying. The drying is preferably performed by passing the liquid composition applied onto the substrate through a drying furnace, a stenter or oven, for example in a roll-to-roll manner. Alternatively, the film may be formed by batch drying or curing. The drying temperature varies depending on the type and content of the solvent. Drying temperature and time may also be impacted when a blend of solvents is used.

The composition can be prepared by blending or mixing or coupling together the fluoropolymer, the silicon-sulfur compounds and the vinyl polymer, preferably by dissolving the fluoropolymer, the vinyl polymer and the silicon-sulfur in an appropriated solvent.

The invention also relates to a component comprising a monolayer according to the invention. Preferably, in the component, the monolayer is coated on a substrate. No pre-treatment is necessary before coating the composition onto the substrate, such as a corona pre-treatment.

The substrate is preferably as described above.

Thus, the component preferably comprises an assembly as described above, i.e. a substrate / monolayer laminate.

In some embodiments, the component has a piezoelectric function and enter in the manufacture of a piezoelectric element or device; an electronic element or device; an energy storage device or element; a semiconductor element or device; an energy generating element or device; or a dielectric element or device or an haptic elements or device.

Piezoelectric and electroactive devices are preferably with active or passive functionality.

Examples of piezoelectric elements or devices are piezoelectric transducers, piezoelectric sensors, piezoelectric actuators, piezoelectric energy harvesters.

Examples of electronic elements or devices are capacitors, microelectromechanical system elements, flexible electronic devices, printed circuit boards, integrated circuits, haptic devices.

Examples of semiconductor elements or devices are light-emitting elements.

Examples of elements energy storage elements or devices are electrodes, in particular flexible electrodes.

Examples of energy generating elements or devices are photoelectric conversion elements, piezoelectric elements, thermoelectric conversion elements, actuators for micro/nanomachines; solar cell.

The invention also relates to a device comprising a component as described above.

In some embodiments, the device is a transducer, a sensor, an actuator, a medical device such as a pacemaker, a tactile sensor, for inspection of defects or for diagnosis / treatment of diseases, a strain-resistant material such as buildings, bridges, dams, aircraft, and space equipment, a broadcast apparatus, a wireless mobile apparatus, a mobile communication apparatus, a radar, a high-speed information processing apparatus, a display device, a probe.

The invention also relates to the use of a vinyl polymer consisting in carbon and hydrogen atoms, and optionally oxygen and/or nitrogen atoms, and of a silicon-sulfur compound, to improve the adhesion strength of a fluoropolymer polymer on a substrate, preferably on a metallic surface of a substrate.

The invention also relates to a method for improving the adhesion strength of a fluoropolymer polymer on a substrate by adding a vinyl polymer consisting in carbon and hydrogen atoms, and optionally oxygen and/or nitrogen atoms and a silicon-sulfur compound to a composition comprising the fluoropolymer polymer, and by applying said composition onto the substrate.

In particular, the adhesion strength of the fluoropolymer polymer is improved in aqueous solutions. In particular, the adhesion strength of the fluoropolymer polymer is improved when it is in contact with water, moisture, sweat, saliva, or any kind of body fluid.

The fluoropolymer, the vinyl polymer, the silicon-sulfur and the substrate are as described above according to any of the embodiments.

The invention also relates to the use of a monolayer according to the invention as a dielectric insulating layer.

The invention also relates to the use of a monolayer according to the invention as a piezoelectric layer.

The invention also relates to the use of a monolayer according to the invention as an electroactive layer.

The invention also relates to the use of a monolayer according to the invention as a pyroelectric layer.

The following examples illustrate the invention but are not limiting it.

### EXAMPLES

Several monolayers with different compositions have been prepared according to the following protocol at lab scale (each step is at room temperature):
1/ Solvent is weighed in a vial
2/ Fluoropolymer is weighted in the same vial and the mixture is stirred for 30 min, then left to stand still for 1 hour
3/ Silicon-sulfur compound and vinyl polymer are weighted and incorporated into the vial. Then, the mixture is stirred for 10 min, then left to stand still until all bubbles have disappeared. The total content of "active ingredients" (fluoropolymer, silicon-sulfur compound and vinyl polymer) is 15 mass%.

Each composition is then applied onto a metallized substrate by screen printing and the solvent is heat-evaporated.

The adhesion of each layer was assessed with a scotch tape by the following protocol:
Type of tape: 3M2525
Adhesion strength on steel: 75N/100 mm
Steps:
   1/ Cut a piece of adhesive about 3 cm long and fold over one end
   2/ Apply the adhesive to the sample by applying a controlled and even pressure to its surface (finger pressure)
   3/ Peel the adhesive at 180° using moderate, constant force (by hand)
   4/ Carry out a visual inspection of the test area on the sample to identify any delamination of the film on the substrate.
Scoring criteria:
   5: no delamination, all the layer is still intact on the substrate
   4: less than 5% (of the surface) of the layer has been delaminated on the applying area of the tape
   3: between 5 and 15% (of the surface) of the layer has been delaminated on the applying area of the tape
   2: between 15 and 35% (of the surface) of the layer has been delaminated on the applying area of the tape
   1: between 35 and 65% (of the surface) of the layer has been delaminated on the applying area of the tape
   0: more than 65% (of the surface) of the layer has been delaminated on the applying area of the tape

The measure of the level adhesion strength of each monolayer after immersion in an aqueous solution was also assessed with the following protocol:
Delay of immersion: 3 days, 7 days, 10 days, 14 days
Steps:
   1/ Preparing a bath of aqueous solution
   2/ Immersing each sample entirely in the aqueous solution, by cautiously avoiding contact or rubbing on the layer (which could damage it)
   3/ Close the container to prevent evaporation of the aqueous solution
   4/ After x days of immersion, take samples
   5/ Carefully dab the remaining aqueous solution off the layer with a lint-free cloth, making sure to preserve the layer, and let drying
   6/ Perform the peel test using the steps and criteria defined above

The details of the composition of each layer and the results of the tests conducted on each layer are gathered in the following table, wherein the vinyl polymer content and the adhesion promoter content are calculated versus the weight of fluoropolymer:

| | Fluoropolymer | Vinyl polymer | Vinyl polymer content | Adhesion promoter | Adhesion promoter content | Result of adhesion test before immersion test | Result of adhesion test after immersion during 14 days in aqueous solution |
|---|---|---|---|---|---|---|---|
| 1* | P(VDF-TrFE-CTFE) | - | - | - | - | 0 | 0 |
| 2* | P(VDF-TrFE-CTFE) | - | - | (3-aminopropyl) triethoxysilane | 1% | 0 | 0 |
| 3* | P(VDF-TrFE-CTFE) | Methacrylate copolymer | 2% | - | - | 5 | 0 |
| 4* | P(VDF-TrFE-CTFE) | - | - | MPMDMS | 2% | 5 | 0 |
| 5 | P(VDF-TrFE-CTFE) | Methacrylate copolymer | 1% | MPMDMS | 1% | 5 | 5 |
| 6 | P(VDF-TrFE-CTFE) | PMMA | 1% | MPMDMS | 1% | 5 | 4 |
| 7* | P(VDF-TrFE-CTFE) | - | - | MPTMS | 2% | 5 | 0 |
| 8 | P(VDF-TrFE-CTFE) | Methacrylate copolymer | 1% | MPTMS | 1% | 5 | 4 |
| 9* | P(VDF-TrFE-CTFE) | - | - | Pentaerythritol tetrakis(3-mercaptopropionate) | 2% | 0 | 0 |
| 10* | P(VDF-TrFE-CTFE) | Methacrylate copolymer | 1% | Pentaerythritol tetrakis(3-mercaptopropionate) | 1% | 2 | 0 |

| | | | | | | | |
|---|---|---|---|---|---|---|---|
| *: comparative | | | | | | | |

### MPTMS:

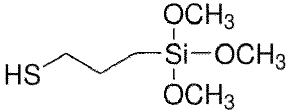

### MPMDMS:

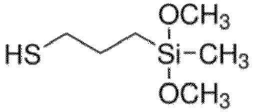

### Pentaerythritol tetrakis(3-mercaptopropionate) :

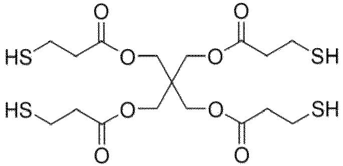

These results show that the presence of both the adhesion promoter and the vinyl polymer are mandatory to obtain a layer of fluoropolymer displaying high adhesion performance even after 14 days of immersion in an aqueous solution.

They also show that thio-compounds that do not comprise any silicon are not efficient to obtain a layer of fluoropolymer displaying high adhesion performance even after 14 days of immersion in an aqueous solution.

## Claims

1. Monolayer comprising:
- a fluoropolymer,
- a silicon-sulfur compound, and
- a vinyl polymer consisting in carbon and hydrogen atoms, and optionally oxygen and/or nitrogen atoms.

2. Monolayer according to claim 1, wherein the fluoropolymer comprises units derived from fluoromonomers of formula (I):
C(X₁)(X₂)=C(X₃)(X₄) (I),
in which each X₁, X₂, X₃ and X₄ is independently selected from H, Cl, Br, F, I, and C1-C6 linear or branched alkyl groups, preferably methyl or ethyl group, which are optionally partially or fully halogenated, with the proviso that at least one of the X₁, X₂, X₃ and X₄ comprises at least one fluorine atom.

3. Monolayer according to claim 1 or 2, wherein the fluoropolymer is a terpolymer of vinylidene fluoride and of a second fluoromonomer and of a third fluoromonomer, provided that the second and third fluoromonomers are different from vinylidene fluoride and different from each other, and wherein the second and the third fluoromonomers are of formula (I):
C(X₁)(X₂)=C(X₃)(X₄) (I),
in which each X₁, X₂, X₃ and X₄ is independently selected from H, Cl, Br, F, I, and C1-C6 linear or branched alkyl groups, preferably methyl or ethyl group, which are optionally partially or fully halogenated,
with the proviso that at least one of the X₁, X₂, X₃ and X₄ comprises at least one fluorine atom.

4. Monolayer according to any of the preceding claims, wherein the content of fluoropolymer is from 80% to 99.9% by mass, preferably from 90% to 99.8% by mass, preferably from 95% to 98.5% by mass, in relation to the total mass of the monolayer.

5. Monolayer according to any of the preceding claims, wherein the silicon-sulfur compound is of formula (II):
(Rd)S-Rw-Si(Ra)(Rb)(Rc) (II)
Rw being a linear or branched or cyclic group comprising from 1 to 18 carbon atoms and optionally one or several oxygen and/or nitrogen atoms, Ra, Rb and Rc are each independently selected from H, OH, Alk and -O-Alk, Alk being a C1 - C8 linear or branched alkyl group, and Rd is selected from the group consisting of H, and an organic moiety comprising from 1 to 30 carbon atoms and at least one nitrogen atom and/or at least one oxygen atom.

6. Monolayer according to any of the preceding claims, wherein the content of silicon-sulfur compound is from 0.05% to 10% by mass, preferably from 0.10% to 5% by mass, preferably from 0.50% to 3.0% by mass, preferably from 0.75% to 2.5% by mass, in relation to the total mass of the monolayer.

7. Monolayer according to any of the preceding claims, wherein the vinyl polymer comprises units derived from a vinyl of formula C(X)(X')=C(X")(X‴), wherein X, X', X" and X‴ are independently selected from the group consisting of a hydrogen atom, an OH group, a COOH group, a CN group, an aromatic group, preferably a phenyl group, a hydrocarbon group comprising from 1 to 10 carbon atoms, preferably from 2 to 10 carbon atoms, saturated or unsaturated, said aromatic group or hydrocarbon group optionally further comprising an OH group, an ester group, a carboxyl group, an amine group, a nitrile group, and/or an amide group.

8. Monolayer according to any of the preceding claims, wherein the vinyl polymer is an acrylate polymer comprising units derived from an acrylate monomer of formula (III): 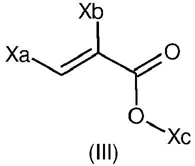 wherein Xa and Xb are independently selected from H, a -CN group, and a C1-C8 linear, branched or cyclic, saturated or unsaturated group comprising from 1 to 8 carbon atoms, and Xc is selected from H, a benzyl group, and a linear or branched or cyclic, saturated or unsaturated, aliphatic or aromatic group comprising from 1 to 24 carbon atoms, optionally substituted by at least one OH group and/or one COOH group, and/or optionally interrupted by at least one -O- atom.

9. Monolayer according to any of the preceding claims, wherein the content of vinyl polymer is from 0.05% to 10.0% by mass, preferably from 0.10% to 8.0% by mass, preferably from 0.50% to 5.0% by mass, preferably from 0.75% to 4.0% by mass, in relation to the total mass of the monolayer.

10. Monolayer according to any of the preceding claims, having a thickness between 0.1 µm and 50 µm, preferably between 0.5 µm and 40 µm, preferably between 1.0 µm and 30 µm, preferably between 1.0 µm and 20 µm, preferably between 2.0 µm and 10 µm.

11. Monolayer according to any of the preceding claims, wherein the total mass of the fluoropolymer, the silicon-sulfur compound and the vinyl polymer in the monolayer represents more than 80% by mass, preferably more than 90% by mass, preferably more than 95% by mass, more preferably more than 98 % by mass, preferably between 80 % and 99.99% by mass, relatively to the total mass of the monolayer.

12. Assembly comprising a substrate and a monolayer according to any one of claims 1 to 11, the monolayer being applied and in contact with at least one surface of the substrate or to part of a surface of the substrate.

13. Assembly according to claim 12, wherein the substrate comprises a metallic surface, in particular a gold, stainless steel, copper, aluminum, chromium or silver surface, and the monolayer is applied onto and in contact with said metallic surface.

14. Assembly according to claim 12 or 13, wherein the substrate comprises a gold surface, preferably consists in gold.

15. Assembly according to claim 12 or 13, wherein the substrate comprises a copper surface, preferably consists in copper.

16. Method of manufacturing a monolayer according to any one of claims 1 to 11, comprising a step of applying a composition comprising at least a fluoropolymer, a silicon-sulfur compound and a vinyl polymer onto a substrate.

17. Component comprising a monolayer according to any one of claims 1 to 11, coated on a substrate.

18. Device comprising a component according to claim 17.

19. Use of a vinyl polymer consisting in carbon and hydrogen atoms, and optionally oxygen and/or nitrogen atoms, and of a silicon-sulfur compound, to improve the adhesion strength of a fluoropolymer polymer on a substrate, preferably on a metallic surface of a substrate.
